# EUROPÄISCHE PATENTSCHRIFT

(11) **EP 3 620 584 B1**
(45) Veröffentlichungstag und Bekanntmachung des Hinweises auf die Patenterteilung: **04.08.2021**
(21) Anmeldenummer: 19195559.0
(22) Anmeldetag: 05.09.2019
(51) Int. Cl.: E02F 9/20, G05G 9/047, G05B 19/042

(54) **BEDIENTEIL FÜR EINE FERNSTEUERUNG, UMFASSEND EINEN AKTIVIERUNGSSENSOR MIT VERÄNDERBAREM EFFEKTIVEN SENSORBEREICH**
OPERATING UNIT FOR A REMOTE CONTROL COMPRISING AN ACTIVATION SENSOR WITH A VARIABLE EFFECTIVE SENSOR AREA
ÉLÉMENT DE COMMANDE POUR UNE COMMANDE À DISTANCE COMPRENANT UN CAPTEUR D'ACTIVATION POURVUE DE ZONE DE DÉTECTION MODIFIABLE EFFICACE

(30) Priorität: 05.09.2018 DE 102018215066
(43) Veröffentlichungstag der Anmeldung: 11.03.2020
(73) Patentinhaber: Brendel Holding GmbH & Co. KG, 74564 Crailsheim (DE)
(72) Erfinder: Dr.-Ing. Brendel, Friederike, 74532 Ilshofen (DE); Dr.-Ing. Antes, Jochen, 74532 Ilshofen (DE)
(74) Vertreter: Weickmann & Weickmann PartmbB

(56) Entgegenhaltungen:
- WO-A1-2018/094436
- DE-A1-102014 214 989
- US-A1- 2004 011 154

## Beschreibung

Die vorliegende Erfindung betrifft ein Bedienteil mit den Merkmalen des Oberbegriffs von Anspruch 1 für eine Fernsteuerung zur Ansteuerung einer Maschine, vorzugsweise für eine Funkfernsteuerung.

Ein solches gattungsgemäßes Bedienteil umfasst eine Prozessoreinrichtung, wenigstens ein manuell bedienbares Bedienelement zur Ansteuerung wenigstens einer Maschinenfunktion, das durch die Prozessoreinrichtung zwischen einem aktivierten und einem deaktivierten Zustand umschaltbar ist, sowie einen dem Bedienelement zugeordneten Aktivierungssensor, der einen effektiven Sensorbereich umfasst und dazu eingerichtet ist, eine definierte Annäherung an den effektiven Sensorbereich durch einen Körperteil einer Bedienperson zu erfassen, vorzugsweise durch wenigstens einen Finger oder eine Hand.

Dabei ist die Prozessoreinrichtung dazu eingerichtet, dann, wenn der Aktivierungssensor die definierte Annäherung an den effektiven Sensorbereich erfasst, das Bedienelement in den aktivierten Zustand umzuschalten, und dann, wenn während einer vorgegebenen Zeitspanne keine definierte Annäherung an den effektiven Sensorbereich durch den Aktivierungssensor erfasst wird, das Bedienelement in den deaktivierten Zustand umzuschalten.

Das gattungsgemäße Bedienteil ist dabei so eingerichtet, dass eine Bedienung des Bedienelements keine Ansteuerung der Maschinenfunktion bewirkt, solange sich das Bedienelement im deaktivierten Zustand befindet.

Dadurch soll eine unbeabsichtigte Ingangsetzung der Maschinenfunktion durch Unachtsamkeit oder Fehlbedienung verhindert werden, was besonders bei der Ansteuerung von kritischen Maschinenfunktionen wie zum Beispiel Bewegungsfunktionen einer Krananlage sowie bei Arbeiten notwendig sein kann, bei denen Personen in unmittelbarer Nähe zu der angesteuerten Maschine arbeiten. Der vorbeschriebene Aktivierungs- oder Freischaltmechanismus für das Bedienelement erhöht also die Sicherheit der Maschine.

Gängige maschinenseitige Lösungen für einen Aktivierungssensor oder Aktivierungsschalter sind mechanische Fußschalter oder Aktivierungstaster am oder im Fahrstand einer Maschine. Solche Lösungen sind auch als Totmanneinrichtung bekannt.

Bei der Maschinenführung über eine Fernsteuerung sind zur Aktivierung eines Bedienelements Taster oder Schalter bekannt, die etwa als eigenständiges Element auf dem Bedienteil der Fernsteuerung vorgesehen sein können oder beispielsweise in einem Überrollbügel oder für die Freischaltung von Meisterschalterbefehlen auch direkt in einem Meisterschalter integriert sein können.

Die Einbindung und Reaktion des (Funk-)Steuersystems und die daraus abgeleiteten Möglichkeiten zur Aktivierung einer Maschinenfunktion sind dabei häufig frei programmierbar und können auf verschiedene Anwendungen abgestimmt werden.

Insbesondere bei zeitlich lange andauernden Arbeitsvorgängen ist die Aktivierung einer kritischen Maschinenfunktion durch dauerhaftes Betätigen eines dafür vorgesehenen Tasters oder Schalters allerdings nicht ergonomisch und kann Ermüdungserscheinungen oder/und Einbußen bei der Effizienz des Maschinenführers bewirken.

Zur Verbesserung der Ergonomie ist bereits bekannt, Aktivierungssensoren einzusetzen, welche eine definierte Annäherung an einen effektiven Sensorbereich erkennen, ohne dass ein nennenswerter Druck auf diesen ausgeübt werden muss, bzw. ohne dass eine mechanische Betätigung erfolgen muss. Das Arbeiten mit solchen Aktivierungssensoren wird im Allgemeinen als wesentlich komfortabler und weniger ermüdend empfunden.

Es ist bekannt, hierzu beispielsweise kapazitive Sensoren zu verwenden, deren Zustand oder Signal vermittels der Prozessoreinrichtung ausgewertet werden kann.

Die Freischaltung oder Aktivierung eines Bedienelements zur Ansteuerung einer Maschinenfunktion basiert dabei auf der Detektion einer Kapazitätsänderung eines Sensorfeldes bei Annäherung oder Berührung durch einen Körperteil der Bedienperson. Dies ist möglich, da der menschliche Körper eine individuelle Kapazität aufweist.

Die Verwendung von derartigen Aktivierungssensoren birgt allerdings das Risiko, dass eine versehentliche Berührung eine ungewollte Freischaltung zur Folge hat, beispielsweise beim Transportieren des Bedienteils oder bei Betätigen eines anderen, benachbarten Bedienelements, was wiederum der beabsichtigten Erhöhung der Maschinensicherheit entgegen wirkt.

Um also die Sicherheit der Maschine zu gewährleisten, muss sichergestellt werden, dass eine versehentliche Freischaltung auch bei der für die Bedienperson komfortableren Lösung durch weitgehend drucklose Berührung oder berührungsfreie Annäherung möglichst ausgeschlossen ist.

Gegebenenfalls müssen hierzu sehr große Abstände zwischen den einzelnen Bedienelementen auf dem Bedienteil gewählt werden. Alternativ müssen die Sensoren so gestaltet sein, dass nur auf einer sehr kleinen effektiven Sensorfläche eine Berührung erkannt wird, was wiederum keine merkliche ergonomische Verbesserung im Vergleich zu der Variante mit einem mechanischen Taster oder Schalter bietet.

Die Druckschrift US 2004/011154 A1 offenbart ein kabelgebundenes Bedienteil mit den Merkmalen des Oberbegriffs von Anspruch 1, bei dem der effektive Sensorbereich verhältnismäßig klein ist. DE 102014214989 A1 offenbart einen Bedienhebel für ein Nutzfahrzeug mit einem verhältnismäßig großen effektiven Sensorbereich. In beiden vorgenannten Dokumenten ist der effektive Sensorbereich nicht veränderbar.

Vor diesem Hintergrund besteht die Aufgabe der vorliegenden Erfindung darin, das aus dem Stand der Technik bekannte Bedienteil so weiter zu entwickeln, dass ein Kompromiss hinsichtlich Ergonomie und Arbeitssicherheit verbessert werden kann.

Diese Aufgabe wird gelöst durch ein Bedienteil mit den Merkmalen von Anspruch 1. Bevorzugte Weiterbildungen sind in den abhängigen Ansprüchen beschrieben.

Erfindungsgemäß ist eine Lage oder/und Größe des effektiven Sensorbereichs auf dem Bedienteil veränderbar.

Ganz allgemein besteht hierdurch die Möglichkeit, den effektiven Sensorbereich für die Aktivierung des Bedienelements an die Anforderungen des jeweiligen Einzelfalls im Hinblick auf die Bedürfnisse und Vorlieben der Bedienperson wie auch auf Arbeits- und Maschinensicherheit anzupassen. Insbesondere kann vorgesehen sein, dass die Lage oder/und Größe des effektiven Sensorbereichs während des Betriebs der Fernsteuerung veränderbar ist.

Erfindungsgemäß ist weiter eine Konfiguration des effektiven Sensorbereichs hinsichtlich dessen Lage oder/und Größe auf dem Bedienteil durch die Prozessoreinrichtung zwischen einer dem deaktivierten Zustand des Bedienelements zugeordneten Grundkonfiguration und einer von der Grundkonfiguration verschiedenen, dem aktivierten Zustand des Bedienelements zugeordneten Arbeitskonfiguration umschaltbar.

Dabei ist die Prozessoreinrichtung weiter dazu ausgebildet, etwa durch entsprechende Programmierung, bei oder nach einem Umschalten des Bedienelements zu einem Zustand aus dem aktivierten und dem deaktivierten Zustand die Konfiguration des effektiven Sensorbereichs zu der diesem Zustand zugeordneten Konfiguration aus Grundkonfiguration und Arbeitskonfiguration umzuschalten.

Der Begriff des Umschaltens ist dabei so zu verstehen, dass eine Umschaltung eines Elements zu einem Zustand oder einer Konfiguration im Sinne einer Änderung nur dann erfolgt, wenn sich das entsprechende Element nicht ohnehin schon in diesem Zustand oder dieser Konfiguration befindet.

Solange das Bedienelement also deaktiviert ist, befindet sich der effektive Sensorbereich in seiner Grundkonfiguration, in welcher Lage oder/und Größe des effektiven Sensorbereichs so ausgewählt sein kann, dass eine unbeabsichtigte Aktivierung mit größtmöglicher Sicherheit vermieden wird, während bei oder nach einer Aktivierung des Bedienelements die Größe oder/und Lage des effektiven Sensorbereichs in der dann wirksamen Arbeitskonfiguration so eingestellt sein kann, dass ein besonders ergonomisches Arbeiten möglich ist, etwa indem der effektive Sensorbereich auf einen Bereich des Bedienteils ausgedehnt wird, der während einer normalen Bedienung ohnehin stets von der Bedienperson berührt wird.

Es wird darauf hingewiesen, dass auch dann, wenn sich das Bedienelement im aktivierten Zustand befindet, es gewünschtenfalls an eine oder mehrere zusätzliche Bedingungen geknüpft sein kann, ob eine Bedienung des Bedienelements auch tatsächlich eine Ansteuerung der zugeordneten Maschinenfunktion bewirkt. Sofern mehrere aktivierbare Bedienelemente vorgesehen sind, kann eine solche zusätzliche Bedingung beispielsweise darin bestehen, dass alle diese Bedienelemente sich gleichzeitig im aktivierten Zustand befinden.

Bevorzugt ist der Aktivierungssensor ein kapazitiver Sensor, dessen effektiver Sensorbereich durch ein entsprechendes Platinenlayout der Sensorfläche bzw. Sensorflächen und eine Ansteuerung bzw. Programmierung des Sensors oder der Prozessoreinrichtung in variabler Weise verändert werden kann, und zwar besonders bevorzugt auch während des Betriebs des Sensors.

Grundsätzlich soll aber auch die Verwendung anderer Sensortypen für den Aktivierungssensor nicht ausgeschlossen sein, solange diese eine Veränderung des effektiven Sensorbereichs hinsichtlich Größe und Lage auf dem Bedienteil ermöglichen.

Gemäß einem bevorzugten Ausführungsbeispiel ist der effektive Sensorbereich eine effektive Sensorfläche. Als definierte Annäherung an die Sensorfläche kann dann deren Berührung oder eine Annäherung an diese auf einen gegebenen Abstand erfasst werden, wobei ein Berührungssensor oder ein Annäherungssensor als Aktivierungssensor zum Einsatz kommen kann.

Alternativ ist es auch möglich, unter Verwendung eines geeigneten Aktivierungssensors das Eindringen in einen dreidimensionalen effektiven Sensorbereich als definierte Annäherung an diesen zu erfassen.

Auf einfache Weise kann eine Verbesserung der Betriebssicherheit dadurch erreicht werden, dass der effektive Sensorbereich der Grundkonfiguration wenigstens teilweise, vorzugsweise vollständig in dem effektiven Sensorbereich der Arbeitskonfiguration enthalten ist, oder der effektive Sensorbereich beim Umschalten von der Grundkonfiguration zur Arbeitskonfiguration vergrößert wird.

Gemäß einem bevorzugten Ausführungsbeispiel ist vorgesehen, dass das Bedienelement einen Griffabschnitt mit einer distalen Deckfläche und einer Umfangsfläche bezüglich einer Längsachse des Griffabschnitts aufweist, wobei der effektive Sensorbereich der Grundkonfiguration durch die distale Deckfläche oder einen Teilbereich davon gebildet ist, während der Sensorbereich der Arbeitskonfiguration wenigstens einen Bereich der Umfangsfläche umfasst und vorzugsweise aus der distalen Deckfläche und der Umfangsfläche gebildet wird.

Diese Lösung ist besonders für ein Bedienelement in Form eines Dreh- oder Joystickschalters vorteilhaft. Bei einem solchen Bedienelement kann eine Aktivierung oder Freischaltung durch gezielte Berührung der distalen Deckfläche erfolgen, während die normale Bedienung des Bedienelements durch Drehen des Drehschalters oder Betätigung des Joysticks automatisch eine Aufrechterhaltung des aktivierten Zustands durch Berührung der Umfangsfläche ermöglicht.

Alternativ oder zusätzlich kann vorgesehen sein, dass das Bedienteil einen Griff umfasst, der dazu ausgelegt ist, während der Bedienung von der Bedienperson gehalten oder berührt zu werden, wobei der effektive Sensorbereich in der Arbeitskonfiguration wenigstens einen Bereich des Griffs umfasst, so das ein ergonomisches Arbeiten möglich ist. Solch ein Griff kann beispielsweise als Überrollbügel oder/und als Tragegriff zum Transport des Bedienteils ausgebildet sein

Wird während einer vorgegebenen Zeitspanne keine definierte Annäherung an den effektiven Sensorbereich durch den Aktivierungssensor erfasst, so wird das Bedienelement deaktiviert und der effektive Sensorbereich in die Grundkonfiguration zurück versetzt. Um ein bequemes Umgreifen auf die übliche Bedienposition der Finger einer Bedienperson nach einer anfänglichen Aktivierung des Bedienelements zu ermöglichen, kann vorgesehen sein, dass die vorgegebene Zeitspanne dabei zwischen einschließlich 0 und 5 Sekunden liegt, bevorzugt zwischen einschließlich 1 und 3 Sekunden.

Um eine Anpassung an verschiedene Bedienpersonen mit unterschiedlichen Handgrößen und ergonomischen Vorlieben zu erleichtern, kann vorgesehen sein, dass die vorgegebene Zeitspanne oder/und der effektive Sensorbereich durch die Bedienperson einstellbar oder modifizierbar ist.

Insbesondere kann vorgesehen sein, dass die Arbeitskonfiguration des effektiven Sensorbereichs durch die Bedienperson einstellbar oder modifizierbar ist.

Beispielsweise ist möglich, dass in einem separaten Lernverfahren eine Bedienperson über einen gewissen Zeitraum typische Bedienbewegungen an dem Bedienteil durchführt und dabei erfasst wird, welche Bereiche des Bedienteils von der aktuellen Bedienperson dabei üblicherweise berührt werden. Anschließend kann die Arbeitskonfiguration des effektiven Sensorbereichs für diese Bedienperson dann entsprechend eingestellt oder modifiziert werden.

Um die Bedienperson über eine Änderung des effektiven Sensorbereichs zu informieren, kann vorgesehen sein, dass das Bedienteil weiter dazu ausgebildet ist, ein Signal an die Bedienperson auszugeben, wenn die Konfiguration des effektiven Sensorbereichs verändert oder umgeschaltet wird. Hierzu bietet sich beispielsweise ein Vibrationssignal an.

Zur Ansteuerung einer Vielzahl von Maschinenfunktionen kann vorgesehen sein, dass das Bedienteil eine Mehrzahl von Bedienelementen umfasst, wobei jedem Bedienelement ein Aktivierungssensor mit einem effektiven Sensorbereich zugeordnet ist, wie er im Zusammenhang mit dem gattungsgemäßen Bedienteil beschrieben wurde. Bevorzugt ist dabei der effektive Sensorbereich von wenigstens zwei, mehreren oder allen Aktivierungssensoren hinsichtlich Lage oder/und Größe auf dem Bedienteil veränderbar.

Besonders bevorzugt ist dabei eine Konfiguration des effektiven Sensorbereichs von wenigstens zwei, mehreren oder allen Aktivierungssensoren hinsichtlich dessen Lage oder/und Größe auf dem Bedienteil durch die Prozessoreinrichtung zwischen einer dem deaktivierten Zustand des jeweiligen Bedienelements zugeordneten Grundkonfiguration und einer von der Grundkonfiguration verschiedenen, dem aktivierten Zustand des jeweiligen Bedienelements zugeordneten Arbeitskonfiguration umschaltbar, wie es im Zusammenhang mit der Erläuterung von Anspruch 1 beschrieben ist.

Hierbei kann vorzugsweise vorgesehen sein, dass das Bedienteil so eingerichtet ist, dass eine Bedienung eines beliebigen Bedienelements nur dann eine Ansteuerung der jeweiligen Maschinenfunktion bewirkt, wenn sich alle Bedienelemente zugleich im aktivierten Zustand befinden. So kann beispielsweise sichergestellt werden, dass das Bedienteil stets beidhändig bedient wird, wenn dies aus Sicherheitsgründen erwünscht ist.

Nachfolgend wird die vorliegende Erfindung anhand von zwei ausgewählten Ausführungsbeispielen illustriert, die in den beiliegenden Figuren dargestellt sind.

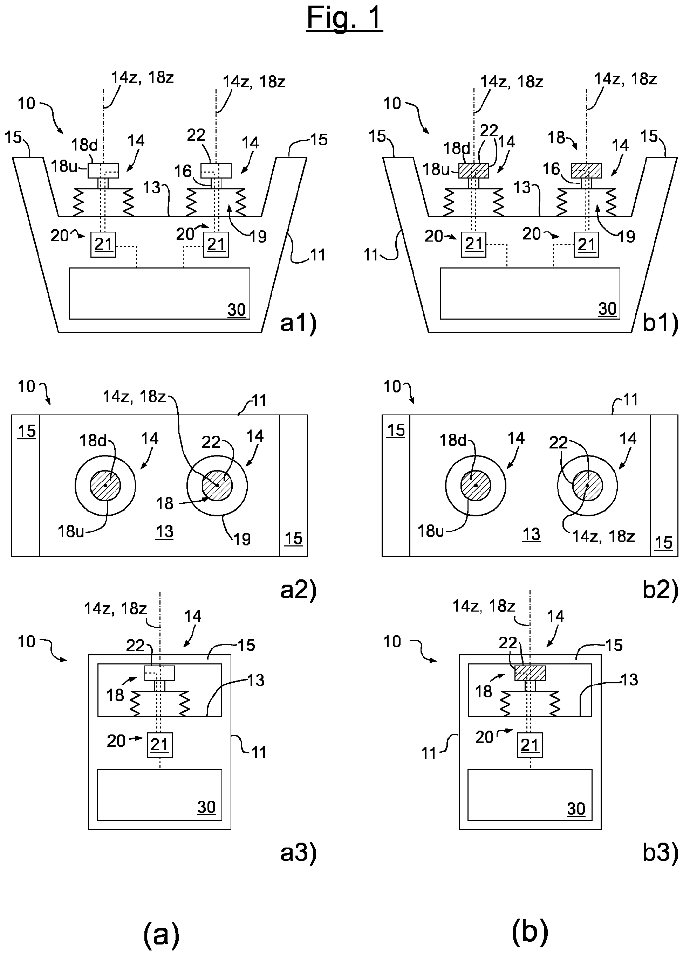

Dabei zeigen
- Fig. 1: in den Teilabbildungen a) und b) ein Bedienteil gemäß einem ersten Ausführungsbeispiel der vorliegenden Erfindung jeweils in drei Ansichten, nämlich von oben nach unten in einer Vorderansicht (a1), b1)), einer Draufsicht (a2), b2)) und einer Seitenansicht (a3), b3)), wobei Teilabbildung a) jeweils das Bedienteil im deaktivierten Zustand und den effektiven Sensorbereich in der Grundkonfiguration zeigt, während Teilabbildung b) jeweils das Bedienelement im aktivierten Zustand und den effektiven Sensorbereich in der Arbeitskonfiguration zeigt, und

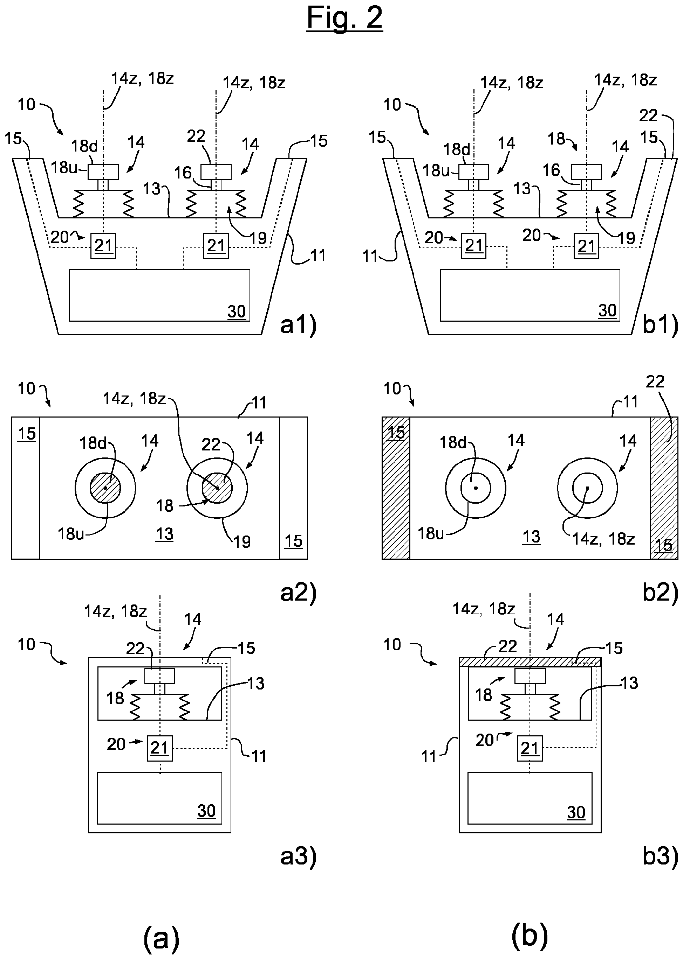

- Fig. 2: in den Teilabbildungen a) und b) ein Bedienteil gemäß einem zweiten Ausführungsbeispiel der vorliegenden Erfindung, wobei die einzelnen Darstellungen jeweils denjenigen der Figur 1 entsprechen.

Es wird darauf hingewiesen, dass es sich bei den Figuren um stark vereinfachte und schematisierte Darstellungen handelt, die in erster Linie das Prinzip der Erfindung veranschaulichen sollen. Um die Figuren nicht zu überfrachten, sind weiterhin nicht in jeder einzelnen Figur alle Merkmale mit Bezugszeichen versehen worden, sondern im Wesentlichen nur diejenigen, die zum Verständnis der Figurenbeschreibung notwendig oder hilfreich sind. Dies gilt vor allem, sofern mehrere gleichartige Elemente dargestellt sind.

Fig. 1 zeigt ein Bedienteil 10 einer Fernsteuerung gemäß einem ersten Ausführungsbeispiel für eine hier nicht näher dargestellte Maschine, bei der es sich beispielsweise um eine Baumaschine, einen Kran oder eine Industrieanlage handeln kann.

Das Bedienteil 10 umfasst ein Gehäuse 11 mit einer Bedienoberfläche 13, an der vorliegend zwei Bedienelemente 14 in Form von Joystick-Schaltern gelagert sind, die zur Ansteuerung verschiedener Maschinenfunktionen dienen können, etwa Hebe- und Schwenkbewegungen einer Krananlage.

Natürlich können an dem Bedienteil entsprechend den jeweiligen Anforderungen noch weitere Bedien- oder/und Anzeigeelemente vorgesehen sein, die hier aus Gründen der Vereinfachung nicht dargestellt sind.

Sofern es sich bei dem Bedienteil um ein Bedienteil einer Funkfernsteuerung handelt, ist im Gehäuse 11 eine hier nicht dargestellte Funksendeeinrichtung bzw. Kommunikationseinrichtung aufgenommen, die dazu eingerichtet ist, Steuersignale oder Befehle an eine maschinenseitig verbaute Empfangseinrichtung zu senden und ggf. auch von dieser zu empfangen.

Da die Bedienelemente 14 im vorliegenden Beispiel identisch aufgebaut sind, wird im Folgenden nur eines der Bedienelemente 14 näher beschrieben.

Jedes der Bedienelemente 14 umfasst einen Hebelabschnitt 16, der um zwei zueinander orthogonale und jeweils parallel zur Bedienoberfläche 13 verlaufende Achsen schwenkbar und zudem um seine strichpunktiert dargestellte Längsachse 14z drehbar am Gehäuse 11 gelagert ist. Es handelt sich also um einen 3-Achsen Joystick-Schalter. Derartige Schalter zur Ansteuerung von Industrieanlagen oder Baumaschinen werden auch Meisterschalter genannt.

Ein Faltenbalg 19 schützt das Bedienteil 10 vor Eindringen von Schmutz und Fremdkörpern in die im Gehäuse 11 enthaltene Mechanik und Elektronik.

Am distalen Ende des Hebelteils 16 ist ein Griffabschnitt 18 ausgebildet, der bezüglich seiner Längsachse 18z eine distale Deckfläche 18d und eine Umfangsfläche 18u aufweist.

Weiterhin umfasst das Bedienteil 10 zwei seitlich angebrachte und nach oben vorstehende, henkelartige Griffe 15, die hier auch als Überrollbügel ausgebildet sind, um eine unbeabsichtigte Auslenkung der Bedienelemente 14 zu verhindern, wenn das Bedienteil 10 auf den Boden fällt.

Form und Abmessungen der vorgenannten Bestandteile des Bedienteils 10 sind dabei im vorliegenden Beispiel bevorzugt so gewählt, dass die beiden Bedienelemente 14 jeweils mit Daumen und Zeigefinger sowie gewünschtenfalls dem Mittelfinger einer Hand bedient werden können, während die Griffe 15 jeweils mit den übrigen Fingern gehalten werden oder die Handballen auf einer oberen Deckfläche der Griffe 15 aufliegen können, etwa wenn das Bedienteil 10 nach Art eines Bauchladens an einem hier nicht weiter dargestellten Tragriemen vor dem Körper getragen wird.

Im Gehäuse 11 ist eine hier nur schematisch dargestellte Prozessoreinrichtung 30 untergebracht, die unter anderem dazu dienen kann, die Bewegung oder Auslenkung der Bedienelemente 14 in Steuersignale zur Ansteuerung der verschiedenen Maschinenfunktionen umzusetzen. Die Prozessoreinrichtung 30 ist hierzu auf bekannte und hier nicht dargestellte Art datenübertragungsmäßig mit den Bedienelementen 14 sowie ggf. mit der Funksende- oder Kommunikationseinrichtung verbunden. Sie kann beispielsweise als Mikrocontroller ausgebildet sein.

Um das Risiko einer unbeabsichtigten Ansteuerung der Maschinenfunktionen zu minimieren, sind die Bedienelemente 14 jeweils durch die Prozessoreinrichtung 30 zwischen einem deaktivierten Zustand (Teilabbildung a) und einem aktivierten Zustand (Teilabbildung b) umschaltbar, wobei das Bedienteil 10 und insbesondere die Prozessoreinrichtung 30 so eingerichtet ist, dass eine Bedienung des Bedienelements 14 keine Ansteuerung der zugeordneten Maschinenfunktion bewirkt, solange sich das Bedienelement 14 im deaktivierten Zustand befindet.

Hierzu ist jedem der Bedienteile 14 ein Aktivierungssensor 20 zugeordnet, der einen in den Figuren jeweils schraffiert dargestellten, effektiven Sensorbereich 22 umfasst und dazu eingerichtet ist, eine definierte Annäherung an den effektiven Sensorbereich 22 beispielsweise durch einen Finger oder eine Hand einer Bedienperson zu erfassen.

Bei dem Aktivierungssensor 20 kann es sich bevorzugt um einen kapazitiven Berührungssensor handeln, wobei die definierte Annäherung an den effektiven Sensorbereich 22 darin bestehen kann, diesen beispielsweise mit einem Finger zu berühren. Es ist allerdings auch möglich, dass die definierte Annäherung darin besteht, beispielsweise Finger oder Hand auf einen vorgegebenen Abstand an den effektiven Sensorbereich 22 anzunähern.

Zwischen jedem Aktivierungssensor 20 bzw. dessen hier nur als Block angedeuteten Sensorelektronik 21 und der Prozessoreinrichtung 30 besteht jeweils eine in den Figuren durch eine gestrichelte Linie angedeutete Kommunikations- oder Datenübertragungsverbindung.

Auf die gleiche Weise wird die Verbindung zwischen der Sensorelektronik 21 des Aktivierungssensors 20 und dessen effektivem Sensorbereich 22 angedeutet, der beispielsweise durch eine Messelektrode eines kapazitiven Sensors definiert sein kann.

Wird also eine definierte Annäherung erfasst, während sich das Bedienelement 14 im deaktivierten Zustand befindet, so veranlasst die Prozessoreinrichtung 30, dass das Bedienelement 14 in den aktivierten Zustand umgeschaltet wird.

Solange die definierte Annäherung fortbesteht, bleibt das Bedienelement 14 im aktivierten Zustand und erst, wenn über eine vorgegebene Zeitspanne hinweg keine definierte Annäherung mehr erfasst wird, wird das Bedienelement 14 wieder in den deaktivierten Zustand umgeschaltet, in dem eine Ansteuerung der Maschinenfunktionen blockiert ist.

Erfindungsgemäß ist die Lage oder/und Größe des effektiven Sensorbereichs 22 auf dem Bedienteil 10 veränderbar, wie ein Vergleich der schraffierten Bereiche in den Teilabbildungen a) und b) veranschaulicht.

Genauer zeigt Teilabbildung a) dabei jeweils das Bedienelement im deaktivierten Zustand und den effektiven Sensorbereich in der Grundkonfiguration, Teilabbildung b) das Bedienelement im aktivierten Zustand und den effektiven Sensorbereich in der Arbeitskonfiguration.

Beim ersten Ausführungsbeispiel wird der effektive Sensorbereich 22 in der Grundkonfiguration nur durch die distale Deckfläche 18d des Griffabschnitts 18 gebildet, in der Arbeitskonfiguration durch die distale Deckfläche 18d und die Umfangsfläche 18u.

Dadurch, dass für eine Aktivierung des Bedienelements 14 aus dem deaktivierten Zustand eine Berührung der verhältnismäßig kleinen Deckfläche 18d erforderlich ist, die zudem auch nur in eine Richtung (nach oben) ausgerichtet ist, wird das Risiko einer versehentlichen Aktivierung vermindert.

Während der Bedienung des Bedienelements 14 aber ständig einen Finger auf der Deckfläche 18d zu halten, wäre unbequem und auf Dauer ermüdend. Daher wird bei oder nach Aktivierung des Bedienelements 14 durch eine Berührung der Deckfläche 18d der effektive Sensorbereich 22 des zugehörigen Aktivierungssensors 20 in die Arbeitskonfiguration umgeschaltet, so dass das Bedienelement 14 im aktivierten Zustand verbleibt, solange der Griffabschnitt 18 an einer beliebigen Stelle von Deckfläche 18d und Umfangsfläche 18e berührt wird.

Erst wenn über eine vorgegebene Zeitspanne hinweg keine Annäherung an den effektiven Sensorbereich 22 in der Arbeitskonfiguration erfasst wird, veranlasst die Prozessoreinrichtung 30, dass das Bedienelement 14 in den deaktivierten Zustand und der effektive Sensorbereich 22 in die Grundkonfiguration zurück versetzt werden.

Fig. 2 illustriert ein leicht abgewandeltes zweites Ausführungsbeispiel, wobei Merkmale des zweiten Ausführungsbeispiels, die solchen des ersten entsprechen, jeweils mit den gleichen Bezugszeichen versehen sind, wie die entsprechenden Merkmale des ersten Ausführungsbeispiels.

Das zweite Ausführungsbeispiel wird auch nur insoweit beschrieben, als es sich vom ersten unterscheidet, auf dessen vorstehende Beschreibung im Übrigen verwiesen wird.

Das Bedienteil 10 in Figur 2 unterscheidet sich nur dahingehend von dem aus Figur 1, dass für jedes Bedienteil 14 der effektive Sensorbereich 22 in der Arbeitskonfiguration, wie in Teilabbildung (b) dargestellt, durch die Aussenoberflächen des Griffs 15 gebildet ist, während er in der Grundkonfiguration (Teilabbildung (a)) genau wie beim ersten Ausführungsbeispiel durch die distale Deckfläche 18d des Griffabschnitts 18 des zugehörigen Bedienelements 14 gebildet ist.

Auf diese Weise wird sichergestellt, dass beim Transport durch Tragen des Bedienteils an den Griffen 15 nicht unbeabsichtigt eine Maschinenfunktion angesteuert wird, aber nach einer anfänglichen Aktivierung ein dauerhaftes ergonomisches Arbeiten möglich ist.

Vorausgesetzt, dass sowohl im Griff 15 als auch in der Umfangsfläche 18d entsprechende Sensorelemente des Aktivierungssensors 20 vorgesehen sind, wäre es auch möglich, dass die Bedienperson einstellen kann, ob bei einem gegebenen Bedienteil der effektive Sensorbereich in der Arbeitskonfiguration gemäß Fig. 1 oder Fig. 2 verwendet werden soll.

Es ist nachzutragen, dass gewünschtenfalls vorgesehen sein kann, die Prozessoreinrichtung 30 in jedem der Ausführungsbeispiele so zu programmieren, dass eine Bedienung jedes der beiden Bedienelemente 14 nur dann eine Ansteuerung der jeweiligen Maschinenfunktion bewirkt, wenn sich beide Bedienelemente 14 zugleich im aktivierten Zustand befinden, so dass sichergestellt wird, dass das Bedienteil 10 stets beidhändig bedient wird.

Durch die hier beschriebene Erfindung kann, insbesondere beim Einsatz kapazitiver Sensoren, gleichzeitig ein hoher Grad an Ergonomie und eine hohe Sicherheit gegen ungewollte Bedienung erzielt werden.

### Bezugszeichen

| | |
|---|---|
| Bedienteil | 10 |
| Gehäuse | 11 |
| Bedienoberfläche | 13 |
| Bedienelement | 14 |
| Längsachse (des Bedienelements) | 14z |
| Griff | 15 |
| Hebelabschnitt (des Bedienelements) | 16 |
| Griffabschnitt (des Bedienelements) | 18 |
| distale Deckfläche | 18d |
| Umfangsfläche | 18u |
| Längsachse (des Griffabschnitts) | 18z |
| Faltenbalg | 19 |
| Aktivierungssensor | 20 |
| Sensorelektronik | 21 |
| effektiver Sensorbereich | 22 |
| Prozessoreinrichtung | 30 |

## Patentansprüche

1. Bedienteil (10) für eine Fernsteuerung zur Ansteuerung einer Maschine, vorzugsweise für eine Funkfernsteuerung, umfassend:
- eine Prozessoreinrichtung (30),
- wenigstens ein manuell bedienbares Bedienelement (14) zur Ansteuerung wenigstens einer Maschinenfunktion, das durch die Prozessoreinrichtung (30) zwischen einem aktivierten (b) und einem deaktivierten Zustand (a) umschaltbar ist,
- einen dem Bedienelement (14) zugeordneten Aktivierungssensor (20), der einen effektiven Sensorbereich (22) umfasst und dazu eingerichtet ist, eine definierte Annäherung an den effektiven Sensorbereich (22) durch einen Körperteil einer Bedienperson zu erfassen, wobei die Prozessoreinrichtung (30) dazu eingerichtet ist, dann, wenn der Aktivierungssensor (20) die definierte Annäherung an den effektiven Sensorbereich (22) erfasst, das Bedienelement (14) in den aktivierten Zustand (b) umzuschalten, und dann, wenn während einer vorgegebenen Zeitspanne keine definierte Annäherung an den effektiven Sensorbereich (22) durch den Aktivierungssensor (20) erfasst wird, das Bedienelement (14) in den deaktivierten Zustand umzuschalten,
und wobei das Bedienteil (10) so eingerichtet ist, dass eine Bedienung des Bedienelements (14) keine Ansteuerung der Maschinenfunktion bewirkt, solange sich das Bedienelement (14) im deaktivierten Zustand (a) befindet,
**dadurch gekennzeichnet, dass** eine Lage oder/und Größe des effektiven Sensorbereichs (22) auf dem Bedienteil (10) veränderbar ist, wobei eine Konfiguration des effektiven Sensorbereichs (22) hinsichtlich dessen Lage oder/und Größe auf dem Bedienteil (10) durch die Prozessoreinrichtung (30) zwischen einer dem deaktivierten Zustand (a) des Bedienelements (14) zugeordneten Grundkonfiguration und einer von der Grundkonfiguration verschiedenen, dem aktivierten Zustand (b) des Bedienelements (14) zugeordneten Arbeitskonfiguration umschaltbar ist, und wobei die Prozessoreinrichtung (30) weiter dazu ausgebildet ist, bei oder nach einem Umschalten des Bedienelements (14) zu einem Zustand aus dem aktivierten (b) und dem deaktivierten Zustand (a) die Konfiguration des effektiven Sensorbereichs (22) zu der diesem Zustand zugeordneten Konfiguration aus Grundkonfiguration und Arbeitskonfiguration umzuschalten.

2. Bedienteil (10) nach Anspruch 1,
**dadurch gekennzeichnet, dass** der Aktivierungssensor (22) ein kapazitiver Sensor ist.

3. Bedienteil (10) nach einem der vorhergehenden Ansprüche,
**dadurch gekennzeichnet, dass** der effektive Sensorbereich (22) eine effektive Sensorfläche ist.

4. Bedienteil (10) nach einem der vorhergehenden Ansprüche,
**dadurch gekennzeichnet, dass** der effektive Sensorbereich (22) der Grundkonfiguration wenigstens teilweise, vorzugsweise vollständig, in dem effektiven Sensorbereich (22) der Arbeitskonfiguration enthalten ist oder dass der effektive Sensorbereich (22) beim Umschalten von der Grundkonfiguration zur Arbeitskonfiguration vergrößert wird.

5. Bedienteil (10) nach einem der vorhergehenden Ansprüche,
**dadurch gekennzeichnet, dass** das Bedienelement (14) einen Griffabschnitt (18) mit einer distalen Deckfläche (18d) und einer Umfangsfläche (18u) bezüglich einer Längsachse (18z) des Griffabschnitts (18) aufweist, wobei der effektive Sensorbereich (22) in der Grundkonfiguration durch die distale Deckfläche (18d) oder einen Teilbereich von dieser gebildet ist, während der effektive Sensorbereich (22) in der Arbeitskonfiguration wenigstens einen Bereich der Umfangsfläche (18u) umfasst und vorzugsweise aus der distalen Deckfläche (18d) und der Umfangsfläche (18u) gebildet ist.

6. Bedienteil (10) nach Anspruch 5,
**dadurch gekennzeichnet, dass** das Bedienelement (14) ein Drehschalter oder ein Joystick-Schalter ist.

7. Bedienteil (10) nacheinem der vorhergehenden Ansprüche,
**dadurch gekennzeichnet, dass** das Bedienteil (10) einen Griff (15) umfasst, der dazu ausgelegt ist, während der Bedienung von der Bedienperson gehalten oder berührt zu werden, und wobei der effektive Sensorbereich (22) in der Arbeitskonfiguration wenigstens einen Bereich des Griffs umfasst.

8. Bedienteil (10) nach einem der vorhergehenden Ansprüche,
**dadurch gekennzeichnet, dass** die vorgegebene Zeitspanne zwischen einschließlich 0 und 5 Sekunden liegt, bevorzugt zwischen einschließlich 1 und 3 Sekunden.

9. Bedienteil (10) nach einem der vorhergehenden Ansprüche,
**dadurch gekennzeichnet, dass** die vorgegebene Zeitspanne oder/und der effektive Sensorbereich (22) durch die Bedienperson einstellbar oder modifizierbar ist.

10. Bedienteil (10) nach einem der vorhergehenden Ansprüche,
**dadurch gekennzeichnet, dass** die Arbeitskonfiguration des effektiven Sensorbereichs (22) durch die Bedienperson einstellbar oder modifizierbar ist.

11. Bedienteil (10) nach einem der vorhergehenden Ansprüche,
**dadurch gekennzeichnet, dass** es weiter dazu ausgebildet ist, ein Signal an die Bedienperson auszugeben, wenn die Konfiguration des effektiven Sensorbereichs (22) verändert oder umgeschaltet wird, vorzugsweise ein Vibrationssignal.

## Claims

1. Operating unit (10) for a remote control for controlling a machine, preferably for a radio remote control, comprising:
- a processor device (30),
- at least one manually operable operating element (14) for controlling at least one machine function, which operating element can be switched between an activated state (b) and a deactivated state (a) by the processor device (30),
- an activation sensor (20) associated with the operating element (14), which activation sensor comprises an effective sensor range (22) and is designed to detect a defined approach to the effective sensor range (22) by a body part of an operator, the processor device (30) being designed to switch the operating element (14) into the activated state (b) when the activation sensor (20) detects the defined approach to the effective sensor range (22), and to switch the operating element (14) into the deactivated state when no defined approach to the effective sensor range (22) is detected by the activation sensor (20) during a predetermined time period,
and the operating unit (10) being designed such that an operation of the operating element (14) does not actuate the machine function as long as the operating element (14) is in the deactivated state (a),
**characterised in that** a position and/or size of the effective sensor range (22) on the operating unit (10) can be changed, it being possible to switch a configuration of the effective sensor range (22), with regard to its position and/or size on the operating unit (10), between a basic configuration which is assigned to the deactivated state (a) of the operating element (14) and a working configuration which is different from the basic configuration and is assigned to the activated state (b) of the operating element (14), by means of the processor device (30), and the processor device (30) further being designed to switch the configuration of the effective sensor range (22) from the basic configuration and working configuration to the configuration assigned to a state when or after the operating element (14) is switched into said state from the activated state (b) and the deactivated state (a).

2. Operating unit (10) according to claim 1,
**characterised in that** the activation sensor (22) is a capacitive sensor.

3. Operating unit (10) according to either of the preceding claims,
**characterised in that** the effective sensor range (22) is an effective sensor surface.

4. Operating unit (10) according to any of the preceding claims,
**characterised in that** the effective sensor range (22) of the basic configuration is at least partially, preferably completely, contained in the effective sensor range (22) of the working configuration, or **in that** the effective sensor range (22) is enlarged when switching from the basic configuration to the working configuration.

5. Operating unit (10) according to any of the preceding claims,
**characterised in that** the operating element (14) has a handle portion (18) having a distal top surface (18d) and a peripheral surface (18u) with respect to a longitudinal axis (18z) of the handle portion (18), the effective sensor range (22) in the basic configuration being formed by the distal top surface (18d) or a portion thereof, while the effective sensor range (22) in the working configuration comprises at least a region of the circumferential surface (18u) and is preferably formed by the distal top surface (18d) and the peripheral surface (18u).

6. Operating unit (10) according to claim 5,
**characterised in that** the operating element (14) is a rotary switch or a joystick switch.

7. Operating unit (10) according to any of the preceding claims,
**characterised in that** the operating unit (10) comprises a handle (15) which is designed to be held or touched by the operator during operation, the effective sensor range (22) comprising at least a region of the handle in the working configuration.

8. Operating unit (10) according to any of the preceding claims,
**characterised in that** the predetermined time period is between 0 and 5 seconds inclusive, preferably between 1 and 3 seconds inclusive.

9. Operating unit (10) according to any of the preceding claims,
**characterised in that** the predetermined time period and/or the effective sensor range (22) can be set or modified by the operator.

10. Operating unit (10) according to any of the preceding claims,
**characterised in that** the working configuration of the effective sensor range (22) can be set or modified by the operator.

11. Operating unit (10) according to any of the preceding claims,
**characterised in that** it is further designed to output a signal to the operator when the configuration of the effective sensor range (22) is changed or switched, preferably a vibration signal.

## Revendications

1. Partie de commande (10) pour une télécommande pour la commande d'une machine, de préférence pour une télécommande radio, comprenant :
- un dispositif de processeur (30),
- au moins un élément de commande (14) maniable manuellement pour la commande d'au moins une fonction de machine qui peut être commutée par le dispositif de processeur (30) entre un état activé (b) et un état désactivé (a),
- un capteur d'activation (20) associé à l'élément de commande (14) qui comporte une zone de détection (22) effective et est conçu afin de détecter une approche définie de la zone de détection (22) effective par une partie de corps d'un opérateur, dans lequel le dispositif de processeur (30) est conçu, lorsque le capteur d'activation (20) détecte l'approche définie de la zone de détection (22) effective, afin de commuter l'élément de commande (14) dans l'état activé (b), et lorsque pendant un intervalle prédéfini aucune approche définie de la zone de détection (22) effective n'est détectée par le capteur d'activation (20), afin de commuter l'élément de commande (14) dans l'état désactivé,
et dans lequel la partie de commande (10) est conçue de sorte qu'un maniement de l'élément de commande (14) ne provoque aucune commande de la fonction de machine tant que l'élément de commande (14) se trouve dans l'état désactivé (a), **caractérisée en ce qu'**une position et/ou grandeur de la zone de détection (22) effective est modifiable sur la partie de commande (10), dans lequel une configuration de la zone de détection (22) effective peut être commutée en ce qui concerne sa position et/ou grandeur sur la partie de commande (10) par le dispositif de processeur (30) entre une configuration de base associée à l'état désactivé (a) de l'élément de commande (14) et une configuration de travail associée à l'état activé (b) de l'élément de commande (14), différente de la configuration de base, et dans lequel le dispositif de processeur (30) est encore réalisé afin de commuter lors ou après une commutation de l'élément de commande (14) dans un état à partir de l'état activé (b) et l'état désactivé (a) la configuration de la zone de détection (22) effective à la configuration associée à cet état à partir de la configuration de base et la configuration de travail.

2. Partie de commande (10) selon la revendication 1,
**caractérisée en ce que** le capteur d'activation (22) est un capteur capacitif.

3. Partie de commande (10) selon l'une des revendications précédentes,
**caractérisée en ce que** la zone de détection (22) effective est une surface de détection effective.

4. Partie de commande (10) selon l'une des revendications précédentes,
**caractérisée en ce que** la zone de détection (22) effective de la configuration de base est contenue au moins partiellement, de préférence complètement, dans la zone de détection (22) effective de la configuration de travail ou que la zone de détection (22) effective est agrandie lors de la commutation de la configuration de base à la configuration de travail.

5. Partie de commande (10) selon l'une des revendications précédentes,
**caractérisée en ce que** l'élément de commande (14) présente une section de préhension (18) avec une surface de recouvrement (18d) distale et une surface périphérique (18u) par rapport à un axe longitudinal (18z) de la section de préhension (18), dans laquelle la zone de détection (22) effective dans la configuration de base est formée par la surface de recouvrement (18d) distale ou une zone partielle de celle-ci, alors que la zone de détection (22) effective dans la configuration de travail comporte au moins une zone de la surface périphérique (18u) et est formée de préférence à partir de la surface de recouvrement (18d) distale et la surface périphérique (18u).

6. Partie de commande (10) selon la revendication 5,
**caractérisée en ce que** l'élément de commande (14) est un commutateur rotatif ou un commutateur à joystick.

7. Partie de commande (10) selon l'une des revendications précédentes,
**caractérisée en ce que** l'élément de commande (10) comporte une manette (15) qui est conçue afin d'être maintenue ou touchée pendant le maniement de l'opérateur, et dans laquelle la zone de détection (22) effective dans la configuration de travail comporte au moins une zone de la manette.

8. Partie de commande (10) selon l'une des revendications précédentes,
**caractérisée en ce que** l'intervalle prédéfini se trouve entre 0 et 5 secondes incluses, de préférence entre 1 et 3 secondes incluses.

9. Partie de commande (10) selon l'une des revendications précédentes,
**caractérisée en ce que** l'intervalle prédéfini et/ou la zone de détection (22) effective est réglable ou modifiable par l'opérateur.

10. Partie de commande (10) selon l'une des revendications précédentes,
**caractérisée en ce que** la configuration de travail de la zone de détection (22) effective est réglable ou modifiable par l'opérateur.

11. Partie de commande (10) selon l'une des revendications précédentes,
**caractérisée en ce qu'**elle est en outre réalisée afin d'émettre un signal à l'attention de l'opérateur lorsque la configuration de la zone de détection (22) effective est modifiée ou commutée, de préférence un signal de vibration.
